# EUROPEAN PATENT SPECIFICATION

(11) **EP 0 851 110 B1**
(45) Date of publication and mention of the grant of the patent: **11.12.2002**
(21) Application number: 97500118.1
(22) Date of filing: 04.07.1997
(51) Int. Cl.: F02K 1/00

(54) **Variable area vectorable nozzle**
Schwenkdüse mit veränderlichem Querschnitt für ein Strahltriebwerk
Tuyère orientable, à section variable, pour un turboréacteur

(30) Priority: 26.12.1996 ES 9602744
(43) Date of publication of application: 01.07.1998
(73) Proprietor: Tobera Vectorial, S.L., 28760 Tres Cantos (Madrid) (ES)
(72) Inventor: Aldecoa-Otalora Garate, Kepa M., 48005 Bilbao (Vizcaya) (ES); Rivacoba, Urruela, José, Las Arenas (Vizcaya) (ES)
(74) Representative: Davila Baz, Angel

(56) References cited:
- EP-A- 0 595 753
- EP-A- 0 687 810
- US-A- 4 175 385

## Description

The present invention relates to improvements in axisymmetric nozzles of variable geometry and orientation of the flow, which are intended for gas turbine engines for twin-jet planes.

Axisymmetric nozzles of variable geometry are known which are capable of realizing three functions, namely: regulating the throat area A₈ in accordance with a given law; symmetrically varying the exit area A₉ with respect to an immobilized throat area; and vectoring the thrust in 360°.

The axisymmetric nozzle which is the object of Spanish Patent Application No. 9401114 has, as new feature over the previously known nozzles, the ability to effect a fourth function, namely axisymmetrically to correct the exit area during the vectoring. The nozzle comprises a convergent zone which defines a throat of variable area and is formed by convergent master petals and by convergent slave petals resting on the adjacent convergent master petals, followed in the direction of the flow of gas by a divergent zone formed of divergent master petals and of divergent slave petals resting on the adjacent divergent master petals and connected to said adjacent divergent master petals by a centering mechanism, the petals of said convergent and divergent zones being distributed circumferentially around the longitudinal axis of the engine, and every convergent master petal being connected to its divergent master petal by a tangential cylindrical articulation with axis perpendicular to the longitudinal axis of the engine; and each petal of the divergent zone being divided into two segments, the upstream segment and the downstream segment, attached to each other by cylindrical articulations having an axis perpendicular to said tangential cylindrical articulation between convergent master petal and divergent master petal; and it also comprises control means for adjusting the throat area and vectoring the thrust which comprise an inner ring, another intermediate ring, and an outer ring, which rings are concentric to each other and to the longitudinal axis of the engine, and of a plurality of linear actuators, each with its upstream end and its downstream end, and of a mechanism for regulating the throat area, the convergent master petals being attached to the inner ring by tangential cylindrical articulations having axes perpendicular to the longitudinal axis of the engine; and all the linear actuators being connected articulately at their upstream ends to a fixed structure of the engine, as well as the fact that one part of the linear actuators have their downstream end attached to spherical articulations of the outer ring and the other part of said linear actuators have their downstream end connected to spherical articulations of the intermediate ring; and each of said rings being connected independently to the fixed structure of the engine by support means which does not interconnect them and maintains each ring fixed laterally; and it also comprises a set of biarticulated bars, one for each divergent master petal, which interconnect the downstream segments of the divergent master petals with the outer ring; the vectoring, in 360 degrees, of the thrust in the divergent zone being obtained by the inclination of the outer ring with a center of swing located on the longitudinal axis of the engine through the set of biarticulated bars; with the feature that the outer ring includes two outer ring segments which are biarticulated to each other by a pair of cylindrical articulations which make it possible to vary symmetrically, by a simultaneous, oppositely directed swinging of the two outer ring segments, the exit area with respect to an immobilized throat area and, during the vectoring of the flow of gas, by an independent swinging of one of the two outer ring segments, to correct the exit area asymmetrically while the other outer ring segment remains immobilized.

Among the advantages of an axisymmetric nozzle of variable geometry and orientation of flow having the new outer ring configuration, the following may be mentioned:
1. By the fact alone of being able to vector the divergent petals by individual groups, there can be avoided the separations of the inner stream of the flow which take place with large angles of average orientation of the flow and low pressure conditions, which are typical of any landing.
   In order to avoid said separation, there is obtained a better coefficient of thrust without loss of effectiveness of the orientation of the flow, since the energy dissipated upon generating the recirculation is utilized in thrust. Furthermore, the processes of separation of fluid streams always result in inherent instabilities of not very high frequency which, in a limit case, could be coupled with the frequency itself of the system.
2. If the geometrical vectoring of part of the petals is smaller, the area of oriented flow which the stream outside the plane sees is less; so that the separations of said outer stream associated with the orientation of the flow are of less intensity; therefore, the instabilities of such stream decrease, including the overall drag of the airplane.
3. In the approach for landing, the vectoring of the exit area A9 of the nozzle is downward. Upon decrease of the vectoring of the petals closest to the ground there is a greater distance to it in the rear part of the plane for the same angle of attack; this makes it possible to land with a larger angle of attack and therefore with greater lift or, its equivalent, with less speed.

In said Spanish Patent Application No. 9401114, two embodiments of the four-function nozzle described are described and claimed.

In the first of the embodiments, called a single control system, the inner and intermediate rings and the interarticulated outer ring segments are interconnected by two pairs of cylindrical articulation bolts, one pair perpendicular to the other pair, and one of the pairs of cylindrical articulation bolts connects the intermediate ring to the inner ring, and the other pair of cylindrical articulation bolts connects the intermediate ring to the articulated ends of the outer ring segments, so as to constitute a single control system in combination with the plurality of linear actuators and the mechanism for regulating the throat area, in which the regulation of the area of the throat is obtained by an axial displacement of the assembly of rings and outer ring segments, and in which the symmetric variation of the exit area with respect to an immobilized throat area is obtained by a simultaneous swinging in opposite direction of the two outer ring segments and in which the vectoring of the thrust is obtained by a simultaneous swinging in the same direction of the two outer ring segments with the centers of swing on the longitudinal axis of the engine and in which the asymmetric correction of the exit area during the vectoring of the flow of gas is obtained by an independent swinging of one of the two outer ring segments while the other outer ring segment remains stationary.

In the second of the embodiments, corresponding to the general case known as two-control systems, the inner and the intermediate rings and the interarticulated two outer ring segments are not connected to each other and constitute, in combination with the plurality of linear actuators and the throat area regulating mechanisms, two control systems in which the regulating of the throat area is obtained by axial displacement of only the intermediate ring, and in which the symmetric variation of the exit area with respect to an immobilized throat area is obtained by a simultaneous swinging in opposite direction of the two outer ring segments, and in which the vectoring of the thrust is obtained by a simultaneous swinging in the same direction of the two outer ring segments with a single center of swing on the longitudinal axis of the engine, and in which the asymmetric correction of the exit area during the vectoring of the flow is obtained by an independent swinging of one of the two outer ring segments, while the other outer ring segment remains stationary.

In this general case, the embodiment with two control systems has the advantage, in addition to those mentioned, of a spherical configuration of the inner part of the fairing of the nozzle around the outer ring, since the two outer ring segments have a single point of swing.

The axisymmetric nozzles of variable geometry and orientation of the thrust in 360 degrees are optimum when there is concerned applying them on a gas turbine for airplanes having a single engine or a single jet. However, in the case of planes equipped with two engines or twin jets, when the two engines are very close to each other, there are generally difficulties in orienting the flow in 360 degrees. However, on the other hand, a twin jet equipped with nozzles of double symmetry or 2-D nozzles has, in theory, properties of maneuverability which are very close to those exhibited by a single jet with engine equipped with nozzle which vectors the thrust in 360 degrees. Since, although the 2-D nozzle vectors the thrust in a single plane which is the plane of pitch of the airplane, the presence of two 2-D nozzles makes it possible, after an initial maneuver of rotation of the plane about its longitudinal axis by vectoring the thrust of a single one of the nozzles or the thrusts of both nozzles simultaneously and in opposite direction, to orient the plane by vectoring the thrusts of the two nozzles simultaneously and in the same direction, in any of the directions. It is true that the 2-D nozzles have the drawback of greater weight, in addition to great difficulties in the sealing of their components.

In the present invention, there is described and claimed a nozzle which, being axisymmetric and of variable geometry and with the ability of effecting the four functions described, that is to say, similar in its entirety to the nozzle already claimed in Spanish Patent Application No. 9401114, represents an addition to said patent since, as sole change, it presents a vectoring ability which is limited to a single plane, the plane of pitch of the airplane, which makes it possible, so that it is suitable for engines of twin-jet planes, to simplify part of their mechanical components, specifically the intermediate ring and the outer ring segments, as well as the articulation means which connect them together and to the fixed structure.

In the general embodiment, corresponding to an axisymmetric nozzle of variable geometry and orientation of the flow, the regulation of the throat area of which and the symmetric variation of the exit area of which, and vectoring of the thrust and asymmetric correction of the exit area are effected by two independent systems of control, the pair of cylindrical articulation bolts which interconnect the articulated ends of the two outer ring segments are fixed in the stationary structure of the engine, the axis of said bolts being normal to the longitudinal axis of the engine and being in the horizontal main theoretical plane which contains said longitudinal axis of the engine. This has as advantage, in addition to a greater rigidity of the assembly of outer ring segments by presenting a single degree of freedom as compared with the floating or flexible connection of the outer ring on the axisymmetric nozzles covered by US Patent No. 336,369 and Spanish Patent No. 9,200,369, a smaller number of linear control actuators for the vectoring of the thrust, since at least two of the linear actuators which are necessary for vectoring the thrust in 360 degrees disappear.

All of the characteristics set forth as well as other characteristics of the invention, as contained in the claims, will be understood better from the following description given with reference to the accompanying drawing, in which there are shown three possible embodiments, given by way of illustration, two for the general case of the axisymmetric nozzle of variable geometry with orientation of the flow having two control systems, one for regulating the throat area A8 and the other for symmetrically varying the exit area with respect to an immobilized throat area, vectoring the thrust and asymmetrically correcting the exit area during the vectoring of the thrust, which has: an inner ring which, being the bearer of the upstream ends of each convergent petal, is rigidly attached to the fixed structure of the engine; an intermediate ring moved axially by the actuators of a first control system for regulation of the throat area A8; and an outer ring, formed by two outer ring segments the ends of which are interconnected articulately by two cylindrical articulation bolts, bearing the upstream ends of the biarticulated bars which support the downstream segments of the divergent master petals and swung by the actuators of a second control system to vector the thrust, symmetrically vary the exit area A9, and correct said exit area asymmetrically and which, in addition to the features set forth in Spanish Patent Application No. 9,401,114, has the novelty of having said cylindrical articulation bolts fixed in the stationary structure of the engine. A third possible embodiment for the special case of an axisymmetric nozzle of variable geometry with orientation of the flow having a single control system for regulating the throat area A8, symmetrically varying the exit area, vectoring the flow and correcting the exit area, which has a single ring, bearing the upstream ends of each convergent petal, and an outer ring bearing the upstream ends of the biarticulated bars which support the downstream segments of the divergent master petals formed by two outer ring segments the ends of which are interconnected articulately by two cylindrical articulation bolts fixed in said inner ring in order, together with the linear actuators and the regulating mechanism of the throat area A8, to constitute a single control system which, by moving axially, regulates the throat area A8 and by swinging the outer ring segments symmetrically varies the exit area, vectors the flow, and corrects the exit area.

In the drawings:

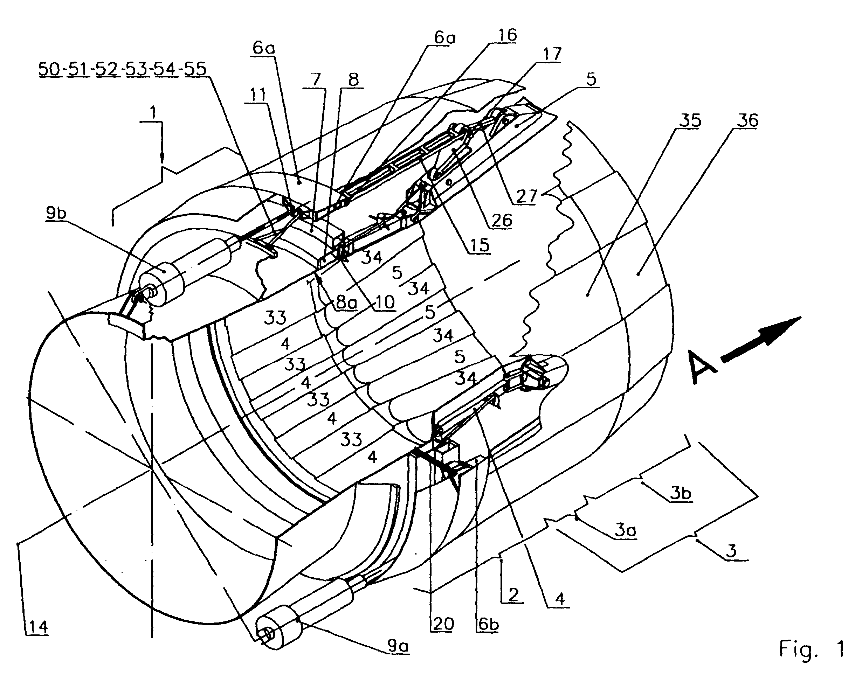

Figure 1 is a perspective view, partially in section, of an axisymmetric nozzle of variable geometry and orientation of flow, formed by two systems of control and perimetral mechanism for regulation of the throat area A8, formed in accordance with the description given.

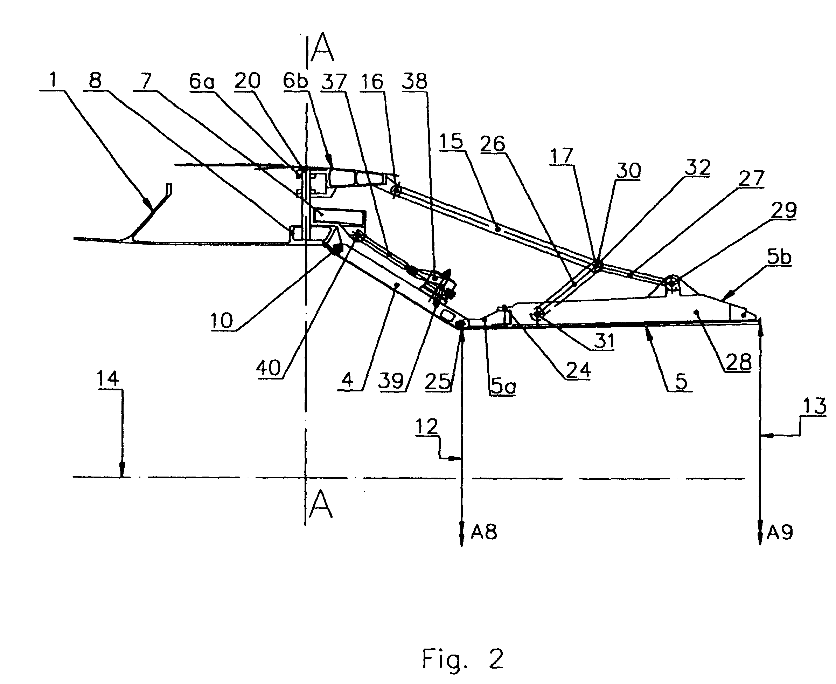

Figure 2 is a longitudinal half section, in the horizontal main longitudinal plane of the nozzle, with two control systems, which is shown in Figures 1 to 10, the nozzle in this Figure 2 being in the closed-throat position, without variation and correction of the exit area, and without vectoring of the thrust.

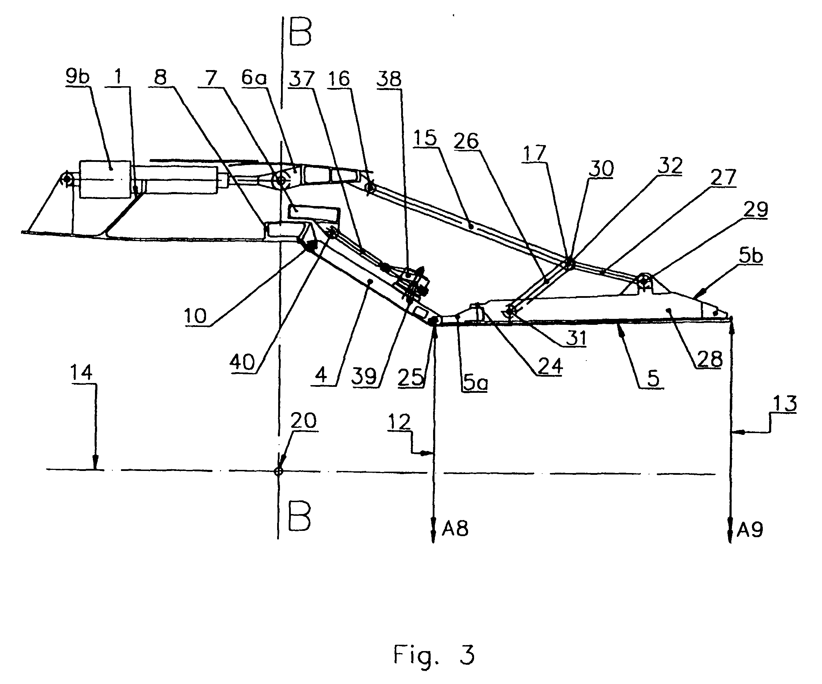

Figure 3 is a longitudinal half section in the vertical main longitudinal plane of this first nozzle with two control systems which is shown in Figures 1 to 10, the nozzle being in the same position in this Figure 3 as shown in Figure 2.

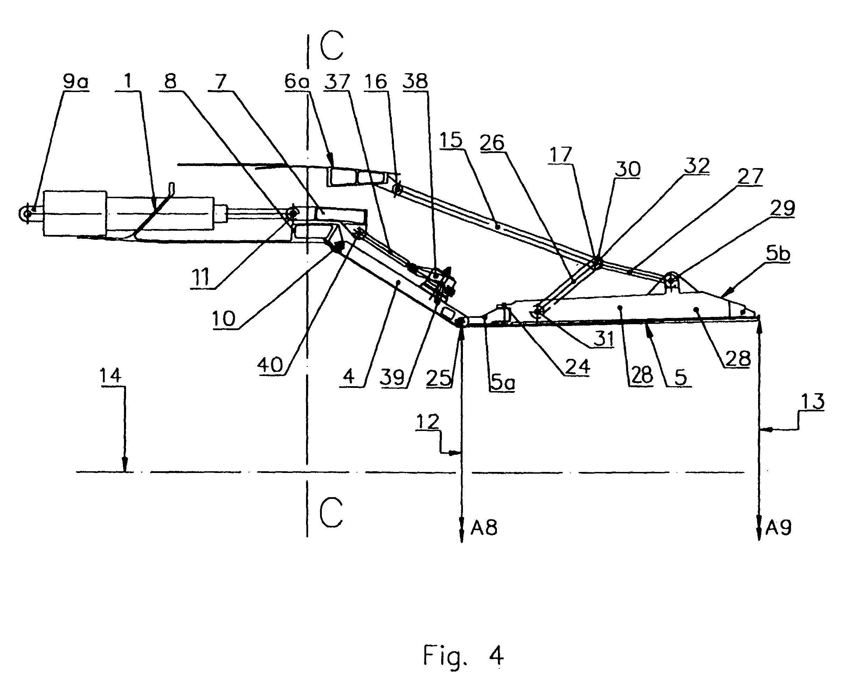

Figure 4 is a longitudinal half section, in a plane which forms an angle of 45 degrees with respect to the horizontal main longitudinal plane, of this first nozzle with two control systems which is shown in Figures 1 to 10, the nozzle being in the same position in this Figure 4 as shown in Figure 2.

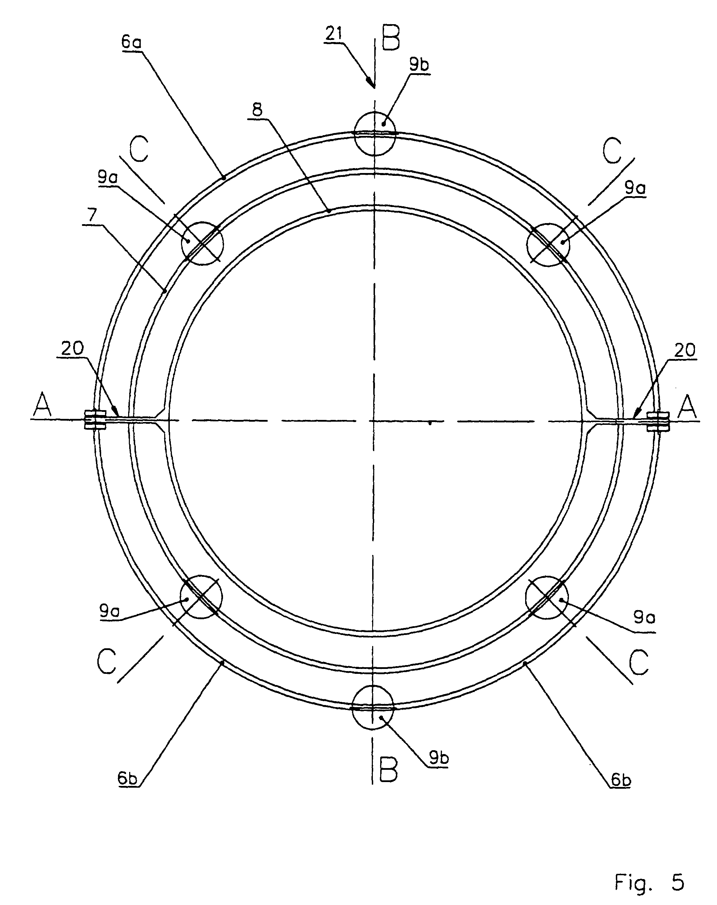

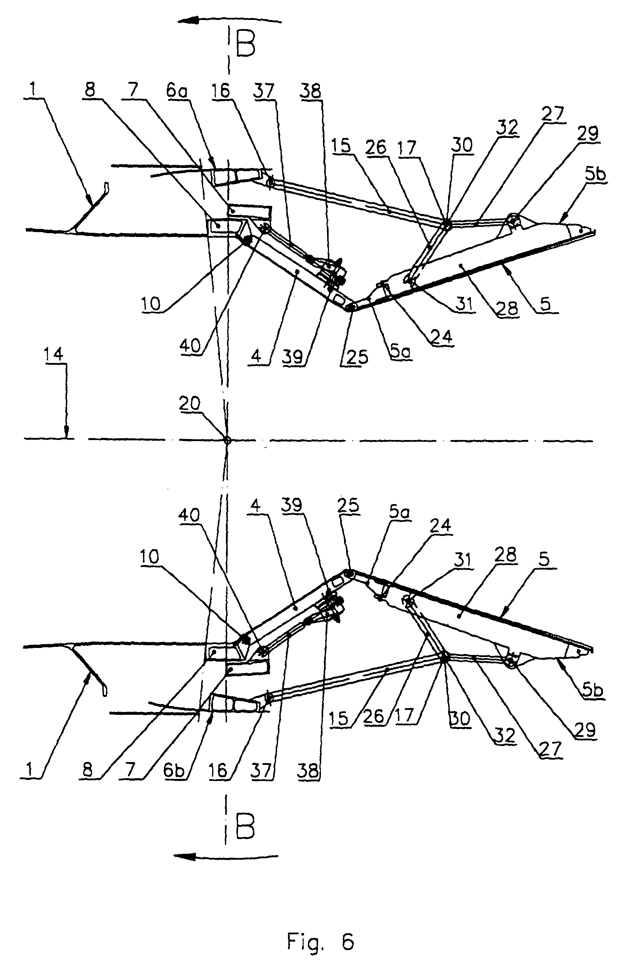

Figure 5 is a cross section through this first nozzle with two control systems and perimetral mechanism, along the section line B-B of Figure 6, in order to show the connections between the different rings and ring segments which, together with the linear actuators, form the two control systems.
Figure 6 corresponds to the longitudinal section of this first nozzle with two control systems and perimetral mechanism, in its vertical main longitudinal plane, along the section line B-B of Figure 5, in closed-throat position, the exit area varied symmetrically and without vectoring of the thrust. The arrows indicate the direction of the swinging of the two outer ring segments.

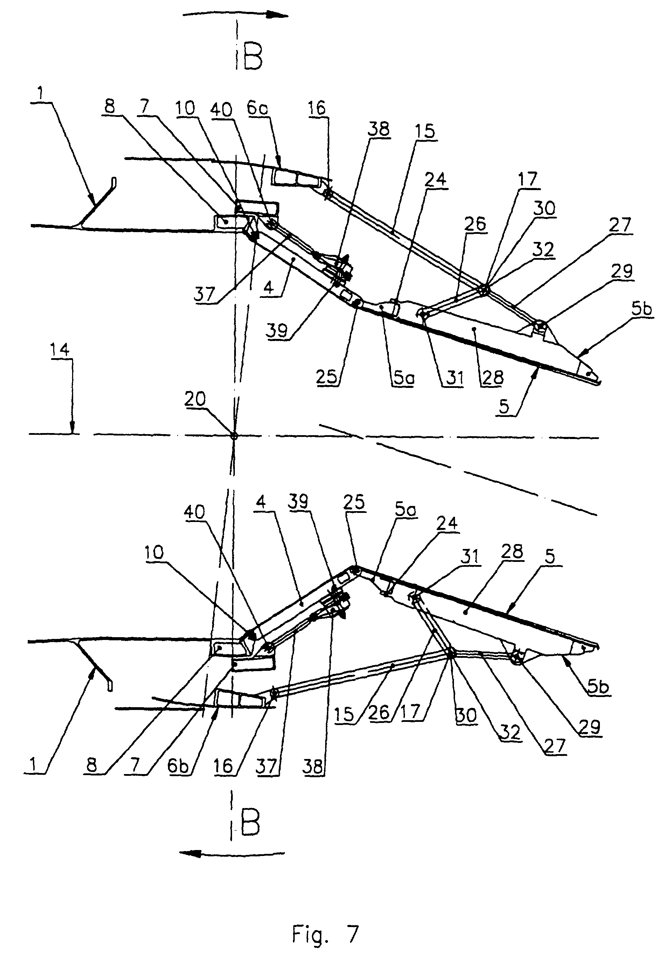

Figure 7 shows the same longitudinal section through this first nozzle with two systems of control and perimetral mechanism, in position of closed-throat area and vectoring the thrust.

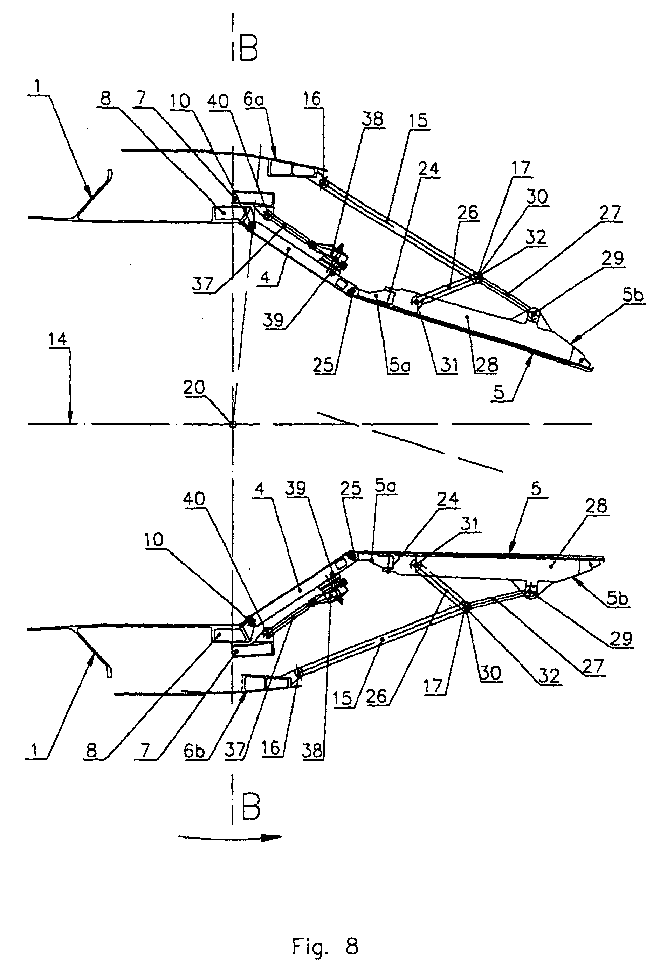

Figure 8 corresponds to the same longitudinal section of this first nozzle with two control systems and perimetral mechanism, in closed-throat position, vectoring the thrust and the exit area asymmetrically corrected. The arrow indicates the direction of the swinging movement of the lower outer ring segment in order to correct the excessive angle of the lower divergent petals.

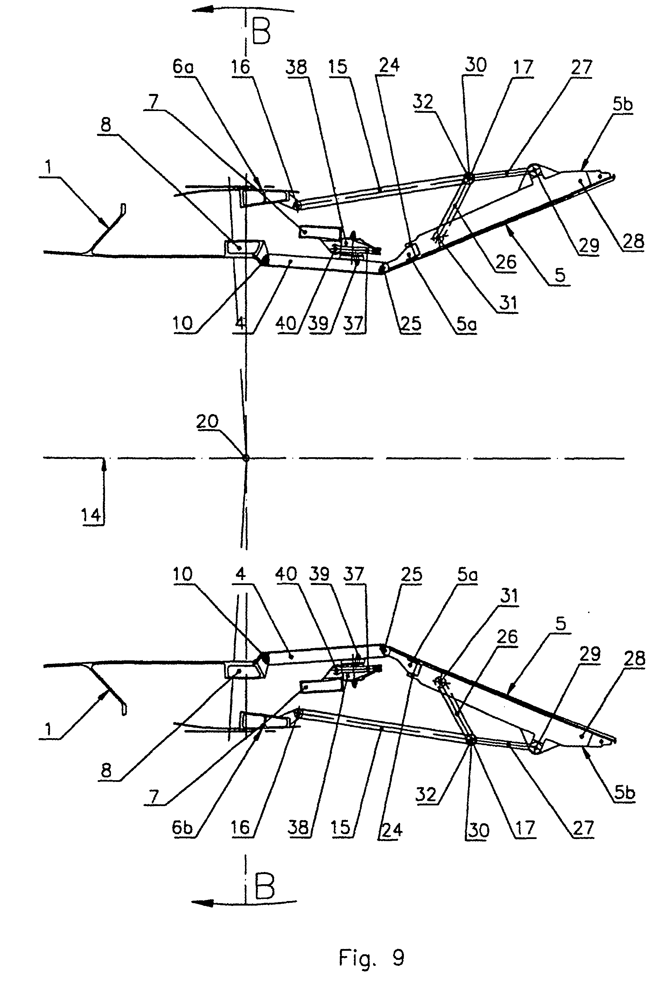

Figures 9 corresponds to the same longitudinal section of this first nozzle with two control systems and perimetral mechanism, but in position of open throat area and the exit area varied symmetrically.

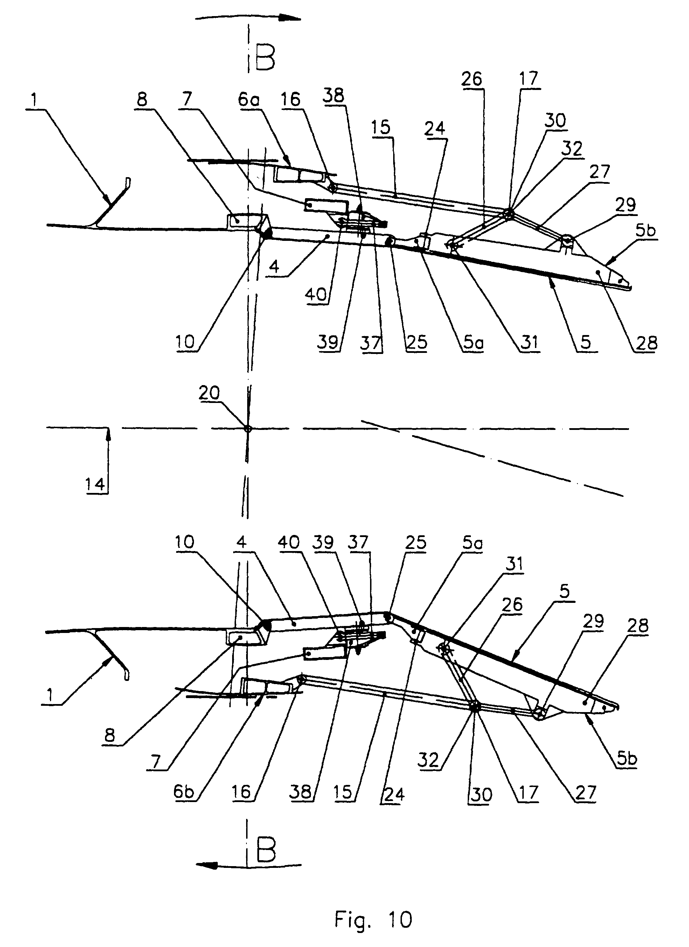

Figure 10 corresponds to the same longitudinal section of this first nozzle with two control systems, in position of open throat area, vectoring the flow of gas and without symmetrically varying the throat area or correcting it asymmetrically.

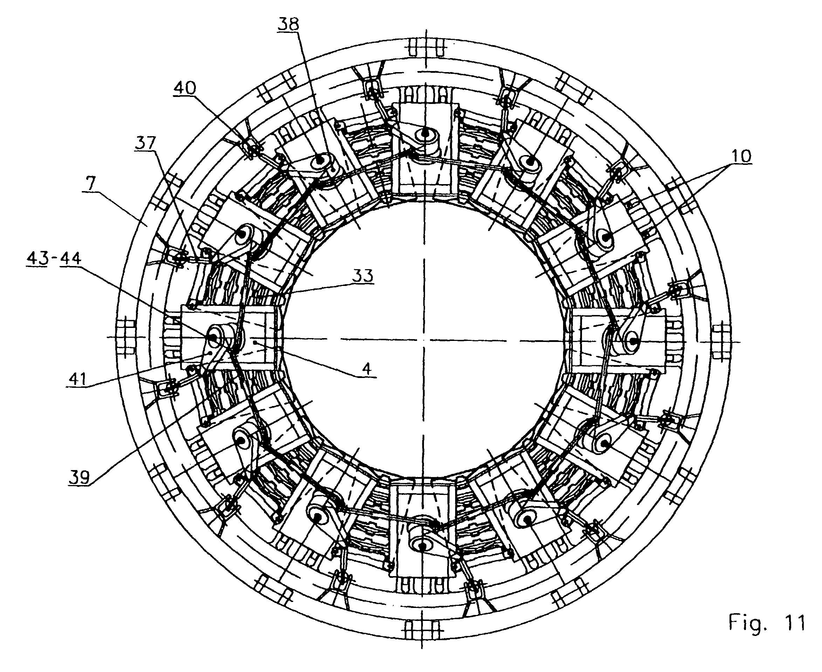

Figure 11 shows the perimetral mechanism for regulating the area of the throat A8.

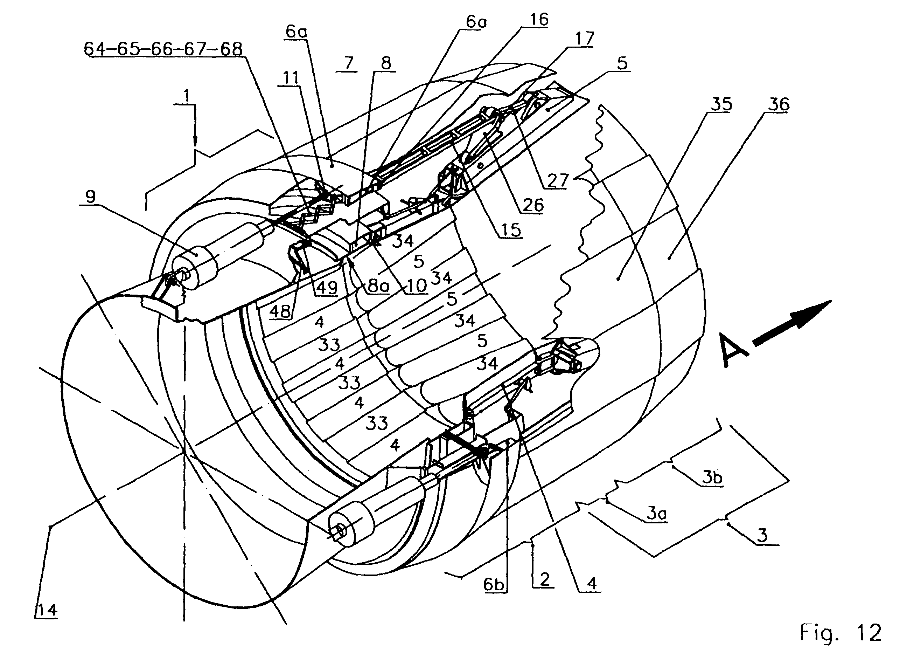

Figure 12 is a perspective view, partially in section, of an axisymmetric nozzle of variable geometry and orientation of the flow, formed with a single control system, both in order to regulate the area of the throat A8 and to vary asymmetrically the exit area, orient the flow, and asymmetrically correct the exit area, the control system of which includes the perimetral mechanism for regulating the area of the throat A8 set forth in Spanish Patent Application No. 9,401,114.

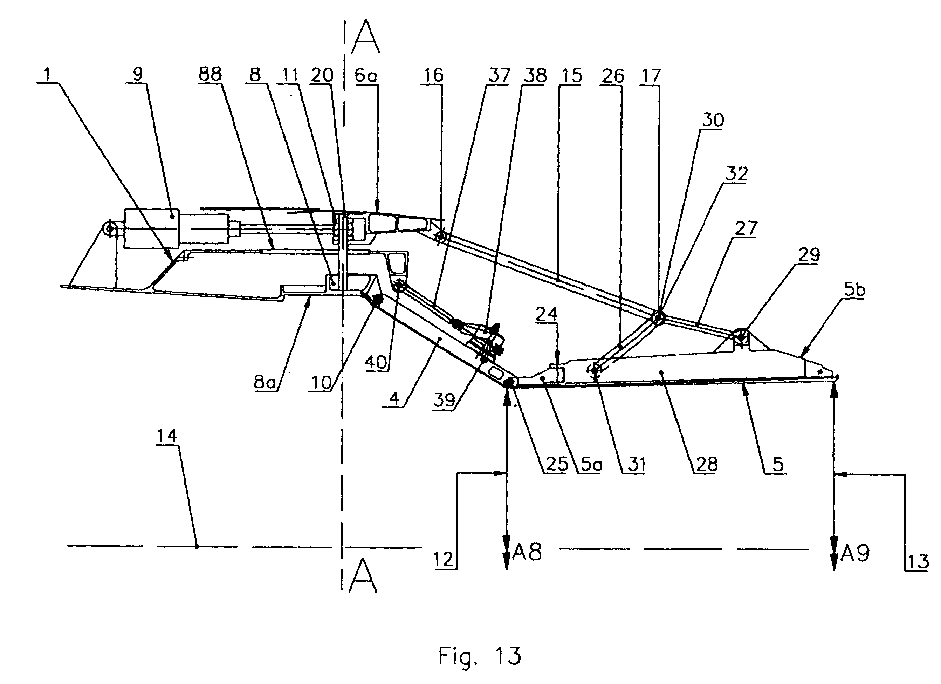

Figure 13 is a longitudinal half section in the horizontal main longitudinal plane of this second nozzle with a single control system and perimetral mechanism, shown in Figures 12 to 18, it being in this figure in closed-throat position, exit area without variation or correction and without vectoring the thrust.

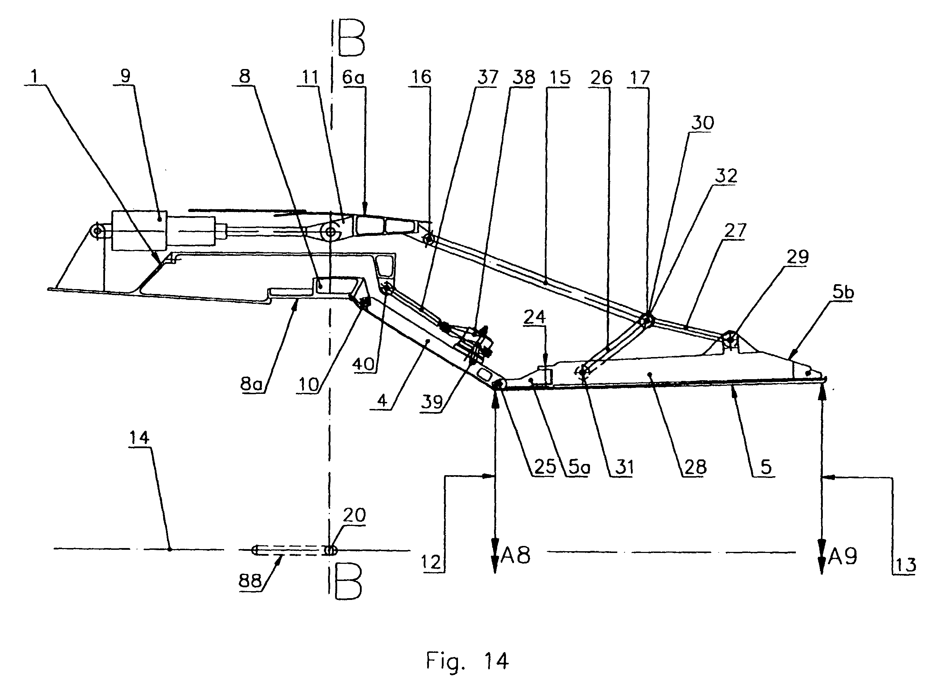

Figure 14 is a longitudinal half section in the vertical main longitudinal plane of this second nozzle with a single control system and perimetral mechanism, shown in Figures 12 to 18, the nozzle in this Figure 14 being in the same position as shown in Figure 13.

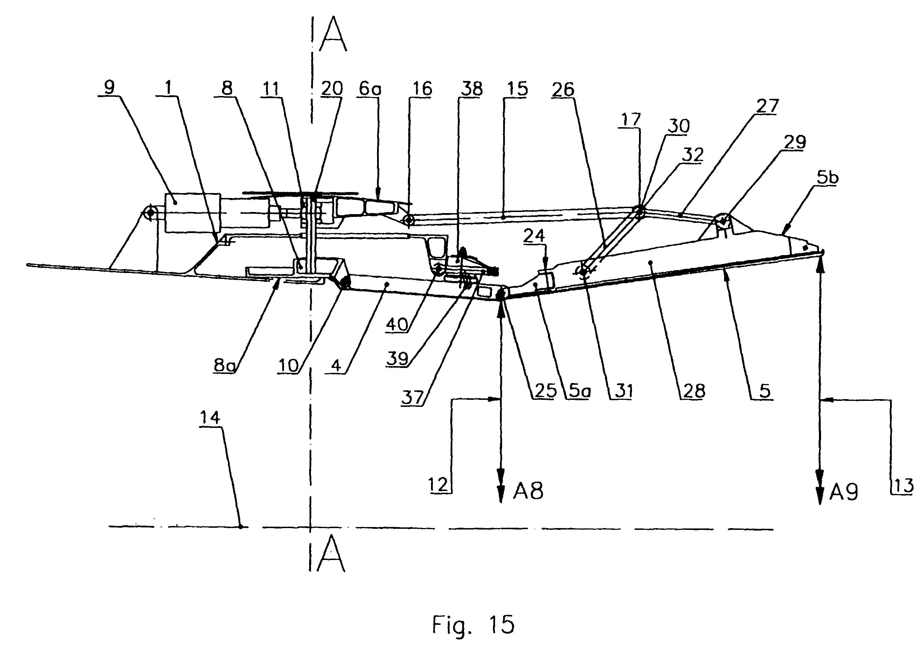

Figure 15 is a longitudinal half section in the horizontal main longitudinal plane of this second nozzle, with a single control system and perimetral mechanism, shown in Figures 12 to 18, the nozzle being with open throat, exit area without variation or correction and without vectoring of the thrust.

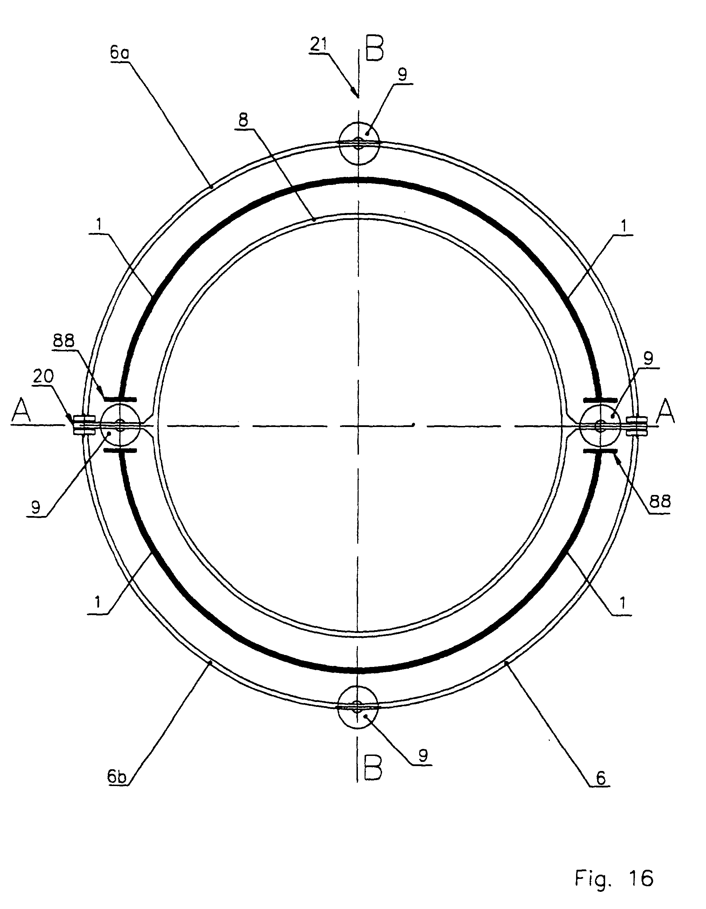

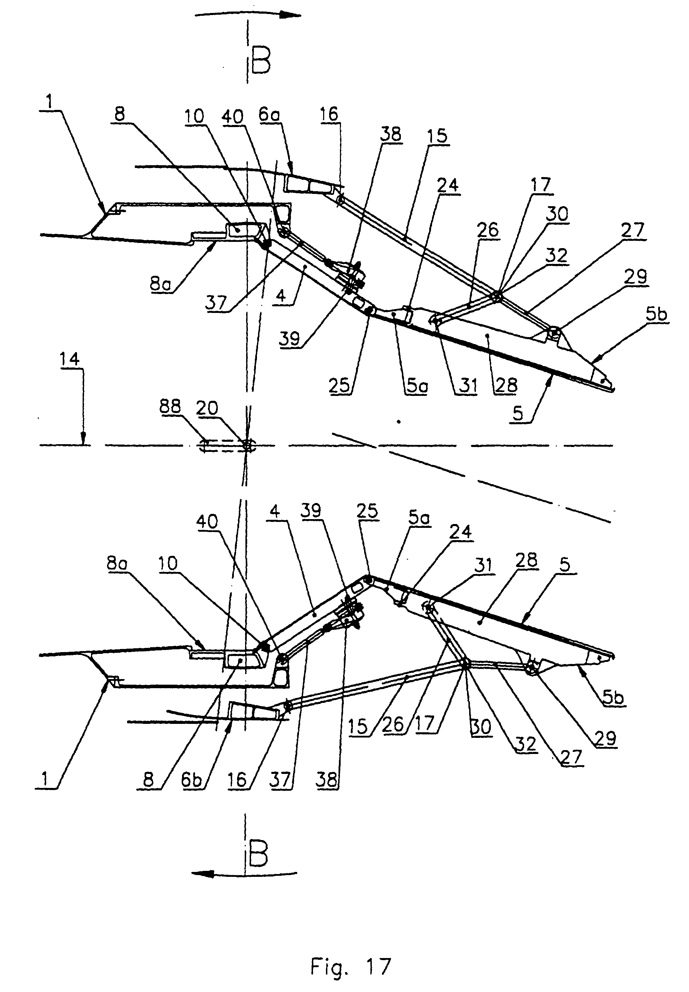

Figure 16 is a cross section through this second nozzle with a single control system and perimetral mechanism, along the section line B-B of Figure 17, in order to show the connections between the inner ring and the two outer ring segments which, together with the linear actuators, form the single control system.
Figure 17 corresponds to the longitudinal section of this second nozzle with a single control system and perimetral mechanism, in its vertical main longitudinal plane along the section line B-B of Figure 16, the nozzle being in the position of closed throat, vectoring of the thrust and exit area without variation or correction. The arrows indicate the directions of the swinging movement of each one of the two outer ring segments.

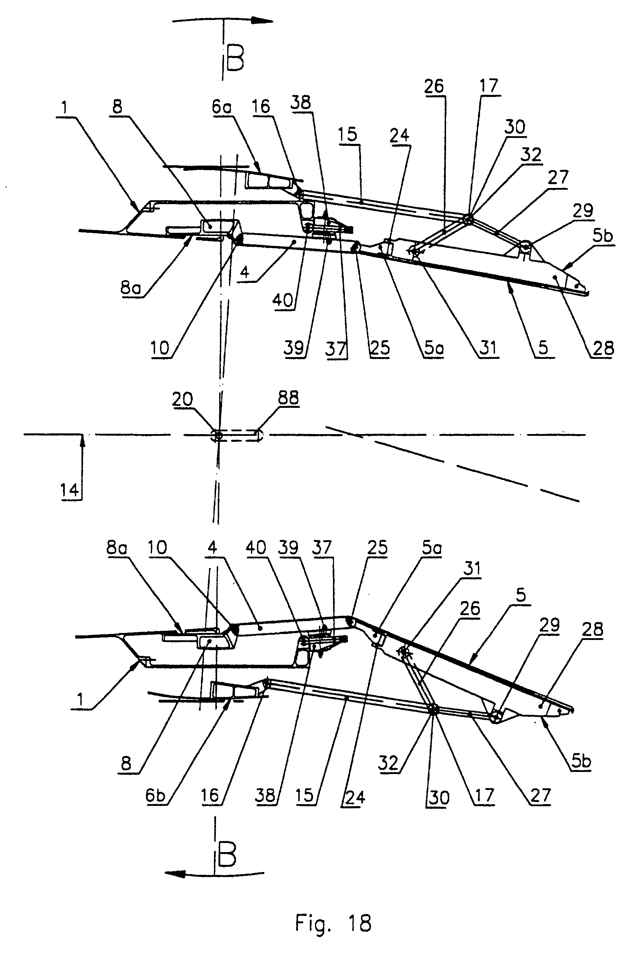

Figure 18 corresponds to the same longitudinal section of this second nozzle with a single control system and perimetral mechanism, in position of open-throat area, vectoring of the thrust and exit area without variation or correction.

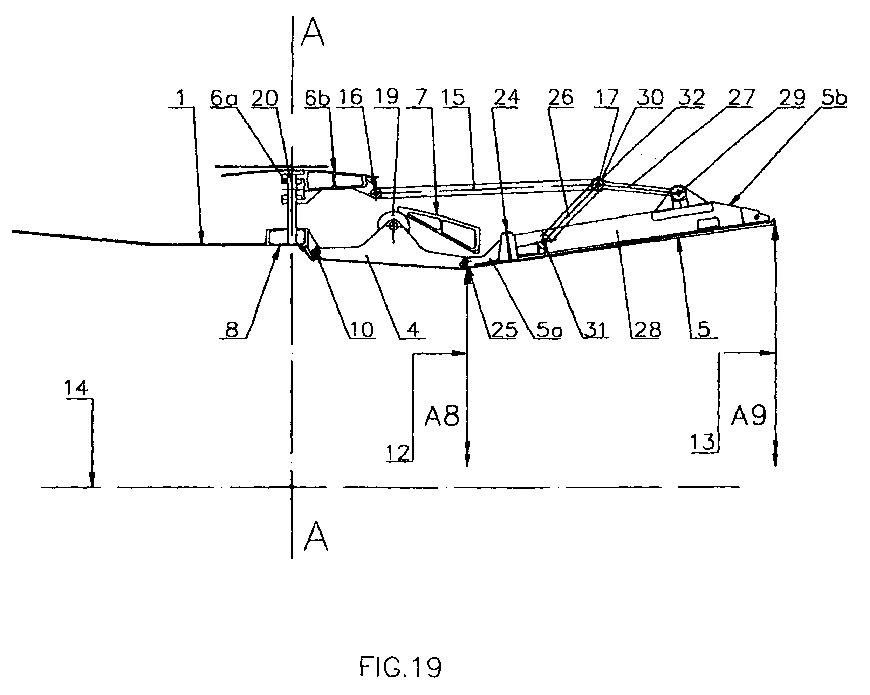

Figure 19 is a longitudinal half section, in the horizontal main longitudinal plane of another embodiment of the nozzle with two independent control systems, one to regulate the throat area A8 and the other to symmetrically vary the exit area with respect to an immobilized throat area and to vector the flow of gas and asymmetrically correct said exit area, a conventional cam and roller mechanism, known in the prior art, forming part of the system for regulating the area of the throat. In this specific case of the third embodiment, Figure 5 also represents the cross section through this nozzle with two control systems.

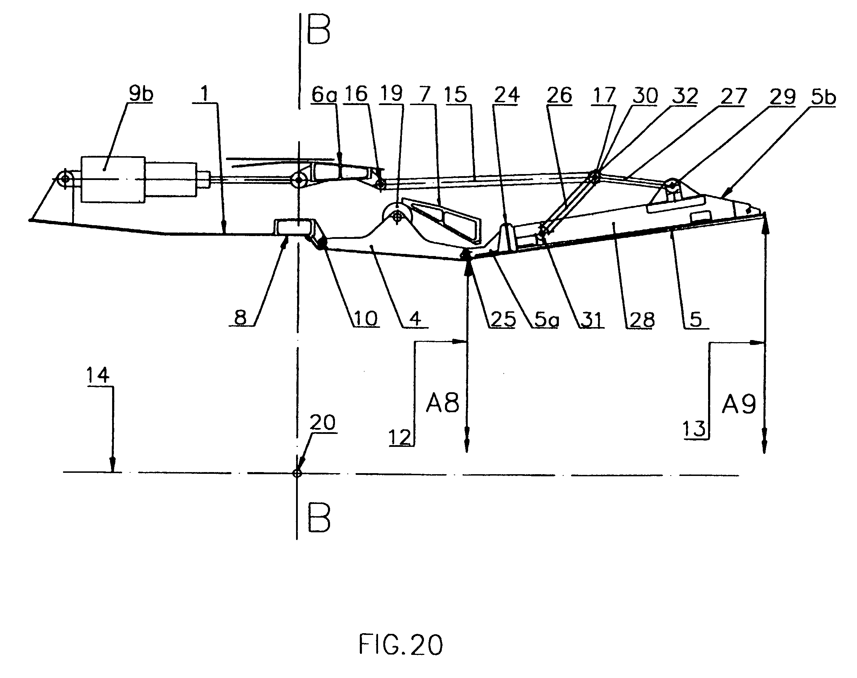

Figure 20 is a longitudinal half section in the vertical main longitudinal plane of this third nozzle with two control systems and cam and roller regulating mechanism, the nozzle being in open-throat position without vectoring of the thrust and exit area without variation or correction.

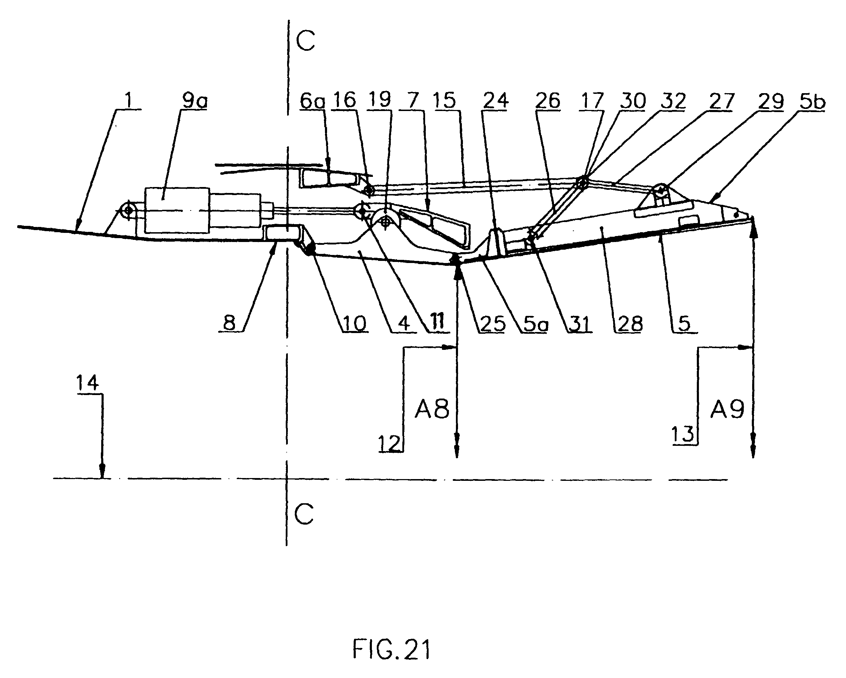

Figure 21 is a longitudinal half section in a longitudinal plane which forms an angle of 45 degrees with the horizontal main longitudinal plane of this third nozzle with two control systems and cam and roller regulating mechanism, the nozzle being in open-throat position, without vectoring of the thrust, and exit area without variation or correction.

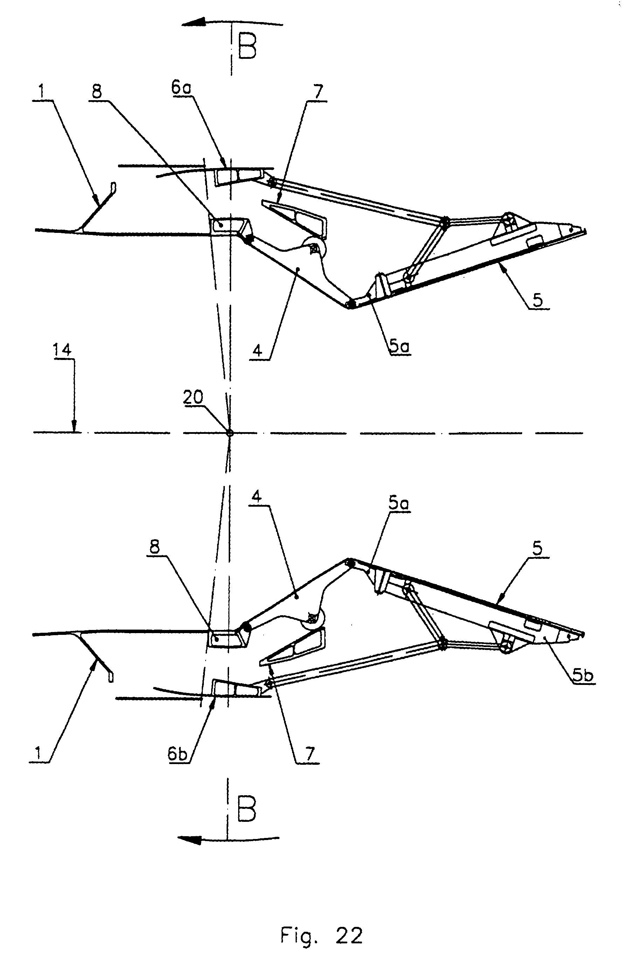

Figure 22 corresponds to the longitudinal section of this third nozzle with two control systems and cam and roller mechanism, in its vertical main longitudinal plane along the section line B-B of Figure 5, in position of closed throat area, the exit area varied symmetrically and without vectoring the thrust or correcting the exit area. The arrows indicate the direction of swing of the two outer ring segments.

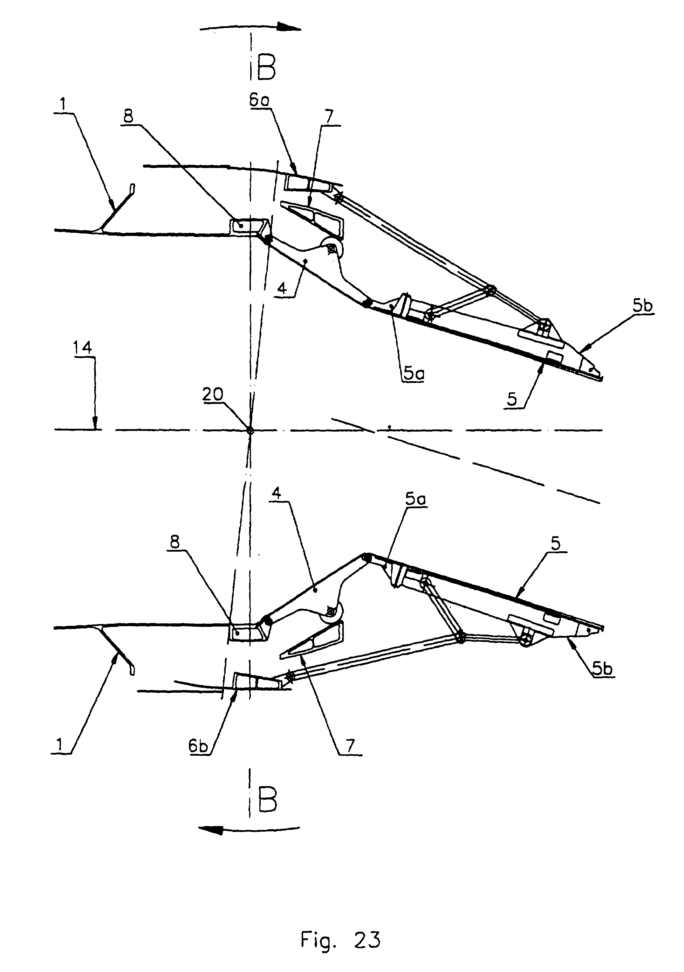

Figure 23 corresponds to the same longitudinal section of this third nozzle of two control systems and cam and roller mechanism in closed-throat position, vectoring the thrust, and exit area without variation or correction.

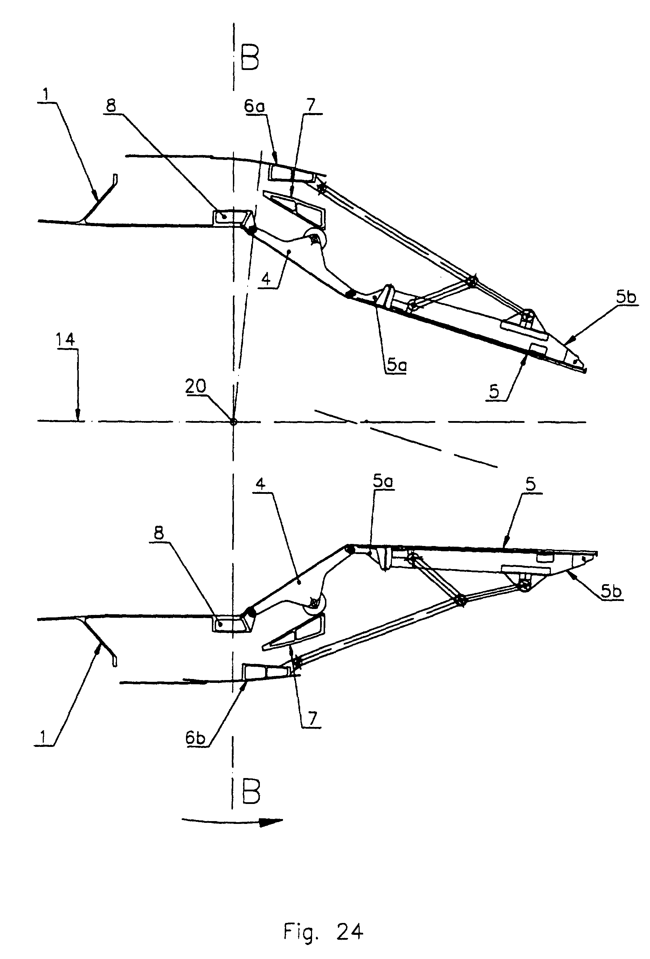

Figure 24 corresponds to the same longitudinal section through this third nozzle with two control systems, cam and roller mechanism, in closed-throat position, without symmetrically varying the exit area, vectoring the thrust, and exit corrected asymmetrically. The arrow indicates the direction of swing of the lower ring segment for correcting said exit area.

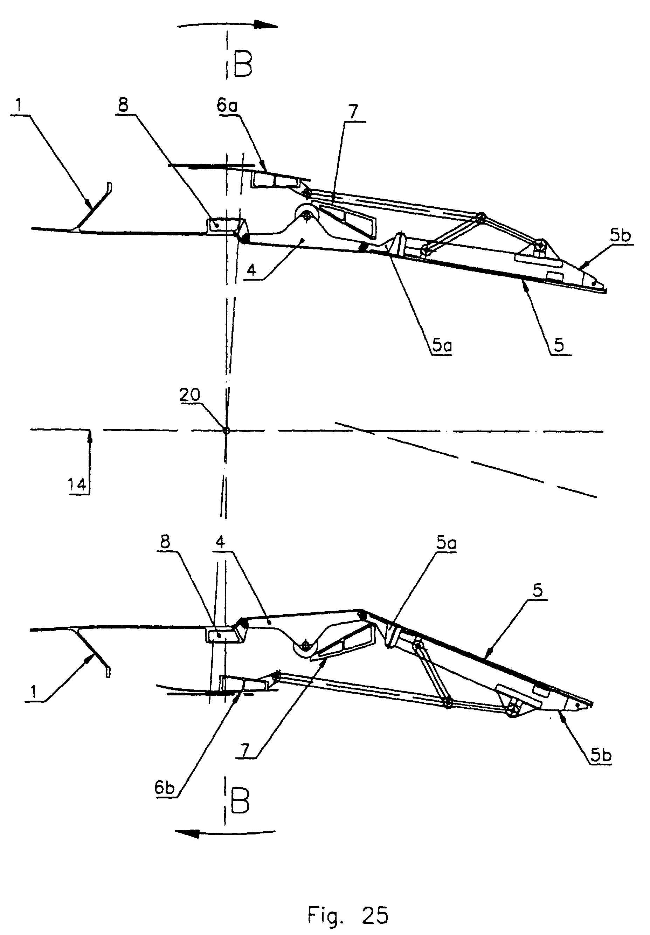

Figure 25 corresponds to the same longitudinal section of this third nozzle of two control systems, cam and roller mechanism, in open-throat position, vectoring the thrust, and exit area without variation or correction.

Figures 1 to 11 show the first nozzle formed with two independent control systems, one for regulating the throat area A8 and the other for symmetrically varying the exit area with respect to an immobilized throat area and for vectoring the flow of gas and asymmetrically correcting said exit area, a perimetral mechanism such as is disclosed in Spanish Patent Application No. 9,401,114 forming part of the system for regulating the throat area.

Figures 12 to 18 correspond to the second nozzle formed with a single control system for regulating the throat area A8, symmetrically varying the exit area A9, vectoring the thrust and asymmetrically correcting the exit area, the same perimetral mechanism as shown in Figure 11 forming part of the single control system for regulating the throat area A8.

Figures 19 to 25 correspond to the third nozzle in accordance with a second embodiment with two independent control systems, one to regulate the throat area A8 and the other symmetrically to vary the exit area A9, vector the thrust and asymmetrically correct the exit area, a cam and roller mechanism forming part of the system for regulating the throat area A8.

Figure 1 is a diagrammatic perspective view, partially in section, of one of the nozzles forming the object of the description, the direction of flow or circulation of the gases being indicated by the arrow. In the same way as the traditional variable-geometry axisymmetric nozzles, the one shown in Figure 1 includes a rear carcass indicated by the numeral 1 which constitutes the final end of the fixed structure of the engine, a convergent zone bearing the reference numeral 2 and a divergent zone bearing the reference numeral 3. The convergent zone 2 is formed by a plurality of master petals 4 and slave petals 33. In the same way, the divergent zone 3 is formed by master petals 5 and the slave petals bearing the reference numeral 34 and is divided into two parts: 3a designates non-vectorable and 3b designates vectorable. The nozzle also includes a control system for regulating the throat area A8, indicated by the reference numeral 12 in Figures 12 and 13, and defined by the intersection between the convergent master petals 4 and the divergent master petals 5, and another independent control system for orientation of the flow, symmetric variation of the exit area A9, indicated by the reference numeral 13 in Figures 2 to 13, and asymmetric correction of said exit area.

The asymmetric variation of the exit area A9, the orientation of the flow and the asymmetric correction of said exit area are produced by a control system which is formed, in combination, by two biarticulated outer ring segments 6a and 6b which together form the outer ring 6, concentric to the longitudinal axis 14 of the engine, and by a set of linear actuators 9b which are articulated at their upstream end to the fixed structure of the engine 1.

The system for regulating the throat A8 is formed, in combination, of a ring referred to as the inner ring which is concentric to a longitudinal axis of the engine and indicated by the reference numeral 8 which, being connected rigidly to the fixed structure 1 of the engine, bears at its downstream end the cylindrical joints 10 which connect articulately to the upstream ends of the convergent master petals 4, and of another ring, referred to as the intermediate ring and bearing the reference numeral 7, which bears on its downstream side a perimetral mechanism, shown in Figure 11, which connects said intermediate ring 7 to each of the convergent master petals 4, and of a second set of linear actuators 9a which are articulated at their upstream end to the fixed structure of the engine 1 and, at their downstream end, are articulately connected by spherical articulations 11, Figures 4 and 21, to the upstream side of said intermediate ring 7.

The two outer ring segments are interconnected, at their articulated ends, by cylindrical articulation bolts, Figures 2, 5 and 13, fixed in the fixed structure 1 itself of the engine, to which the inner ring 8 is rigidly attached. Furthermore, the outer ring segments 6a and 6b are related to the divergent master petals 5 by biarticulated bars 15 which are mounted concentrically around the axis 14 of the engine. The connection of each biarticulated bar 15 to the outer ring segments 6a and 6b is effected by the cylindrical articulation 16 and its connection to the divergent master petal 5 is effected by a cylindrical articulation 17. Both cylindrical articulations 16 and 17 are arranged in such a manner that, without orientation of the flow, they are tangent to a theoretical circumference concentric to the longitudinal axis of the engine and located in a theoretical plane perpendicular to said longitudinal axis of the engine.

On their part, the outer ring segments 6a and 6b are guided laterally by flat systems of articulated bars the components of which bear the numerals 50 to 55, together with the fixed structure 1 of the engine, Figure 1, which permit the swinging of these outer ring segments 6a and 6b around the cylindrical articulation bolts 20, each of said flat systems of articulated bars being articulately connected at its downstream end with one of the outer ring segments, while, at its upstream end, it is connected also in a pivoted manner, with the fixed structure of the engine. The guide systems described for the outer ring segments 6a and 6b have to absorb the net shear forces which appear during the orientation of the flow and those to asymmetry of the loads.

The perimetral mechanism for the regulating of the throat area A8, shown in Figure 11, is formed by each convergent master petal 4, a single connecting rod 37, a two-arm crank 38, and a peripheral bar 39, said connecting rod 37 being connected at its upstream end by means of a spherical articulation 40 to the downstream of the intermediate ring 7 and, at its downstream end, to one of the arms 41 of said crank 38 which is mounted pivotally on a pivot which, forming an integral part of said convergent master petal 4, has its axis perpendicular to the base of said convergent master petal, while the other arm 43 of said crank 38 is connected, by spherical articulation 44, to one of the ends of the peripheral bar 31, while the other end of said peripheral bar is connected by a spherical articulation to the pivot of the adjacent convergent master petal in order for the assembly of cranks 38 and peripheral bars 39 of all the convergent master petals 4 to form a peripheral system which is closed on itself.

The arrangement described, shown in the figures, permits, by activation in one direction or the other of the control actuators 9, the following functions which have already been mentioned:
1. Axial movement of the intermediate ring 7, together with the biarticulated bars 15, and the convergent and divergent petals, in order to regulate the throat area A8, referenced by the numeral 12. Said axial movement of the intermediate ring causes an angular displacement of the convergent master petals 4 through the perimetral mechanism for the regulation of the area of the throat A8 around the articulation 10. Said convergent master petals 4, due to the connecting rod 37, the two-arm crank 38, and the peripheral bar 39 open or close in radial direction, defining, together with the biarticulated bars 15, the position of the divergent master petals 5. In this function, the control actuators 9 always have the same length.
2. The outer ring segments 6a and 6b swing, as a single body, on the bolts 20 which pivotally interconnect them and are fixed in the fixed structure 1 of the engine, in order to obtain, through the biarticulated bars 15, the orientation of the flow in a plane normal to the axis of said bolts 20.
3. To the above movement there is added the possibility of symmetric relative swinging between the outer ring segments 6a and 6b in order to obtain, through the biarticulated bars 15, a bisymmetric variation of the exit area A9, referenced by the numeral 13, with respect to an immobilized throat area A8, both during the orientation of the flow and when it is not oriented.
4. In an oriented flow geometry, with independent swinging of only one of the outer ring segments 6a or 6b, the exit area A9, referenced by the reference numeral 30, is asymmetrically connected through the biarticulated bars 15. In this fourth function, only those actuators of the control system which move the swung outer ring segment present a negative increment.

The four functions can be realized simultaneously.

In the vectoring function, the biarticulated bars 15, which are connected by a cylindrical articulation 16 to the outer ring segments 6a or 6b, turn with said outer ring segments and compel the divergent master petals 5 to move in radial direction and also in tangential direction, thus making it possible to obtain the orientation of the flow. For this, the divergent master petal is divided into two segments, indicated by the numerals 5a and 5b, and referred to as non-vectorable and vectorable respectively, which are connected to each other by a cylindrical articulation 24 arranged in direction perpendicular to the center line of the base of the petal 5. The segment 5a is connected by a cylindrical articulation 25 to the convergent master petal 4. The downstream segment 5b of each divergent master petal is formed by an upstream intermediate bar 26 and a downstream intermediate bar 27 plus a stiffened plate 28 the inner surface of which is seen by the flow of gases, as described in Spanish Patent Application No. 9,302,455 of 1993. The upstream intermediate bar 26 is interconnected to the biarticulated bar by a cylindrical articulation 30 and to the vectorable 5b of the divergent master petal by a spherical joint 31, while said cylindrical articulation 30 is connected to the downstream end of said vectorable 5b of the divergent master petal by the downstream intermediate bar 27 with spherical joints 32 and 29.

Similar radial and tangential movements with respect to the articulation axis 20 are present in the third function; and only in half circumference when the fourth function is concerned.

In Figures 2 to 10 and 13 to 25, for reasons of clarity there have not been shown the movable members 35 and 36 which constitute the movable carcass of the nozzle, which members are similar to those described in Spanish Patent No. 9,200,369 of 1992. Said movable members 35 and 36 are shown only in Figures 1 and 12.

In Figures 12 to 18 there are set forth the particular details of the axisymmetric nozzle of variable geometry established with a single control system which, differing from the nozzle described in Figures 1 to 10, has no intermediate ring, and the two cylindrical articulation bolts which interconnect the articulated ends of the two outer ring segments are connected rigidly to the inner ring 8, the fixed structure 1 of the engine having two longitudinal grooves 88 through which the articulation bolts 20 reach the inner ring 8.

In Figure 12 there is shown a diagrammatic, perspective view, partially in section, of this second axisymmetric nozzle of variable geometry which is the object of description, the arrow A indicating the direction of the flow or circulation of the gases. In the same was as the traditional nozzles, the one shown in Figure 12 includes a rear carcass, indicated by the numeral 1, which constitutes the final end of the fixed structure of the engine, a convergent zone which is indicated by the numeral 2 and a divergent zone which is indicated by the numeral 3. The convergent zone 2 is formed of a plurality of master petals indicated by the numeral 4 and slave petals 33 which define a throat A8 indicated by the numeral 12. In the same way, the divergent zone 3 is formed by master petals 5 and slave petals 34 and is divided into two parts: 3a designates non-vectorable and 3b designates vectorable.

The regulating of the throat area A8 and the orientation of the flow are effected by a single control system which is formed, in combination, by a movable ring in a single piece, known as internal ring 8, and by two biarticulated outer ring segments designated 6a and 6b which together form the outer ring 6, the components of said combination of ring and ring segments being concentric to each other and to the longitudinal axis 14 of the engine, and by a plurality of control actuators 9 which are articulated at their upstream end to the fixed structure of the engine 1.

The convergent master petals 4 are connected, at their upstream end, to the inner ring 8. This connection is effected by cylindrical articulations 10 tangential to a theoretical circumference concentric to the longitudinal axis of the engine and located in a theoretical plane perpendicular to said longitudinal axis of the engine.

To the outer ring segments 6a and 6b and to the cylindrical articulation connecting said outer ring segments, defined by the bolts 20, Figures 13 and 15, there are connected, by the spherical articulations 11, Figures 13 and 15, the downstream ends of the control actuators 9. Furthermore, the outer ring segments 6a and 6b are connected to the divergent master petals 5 by biarticulated bars 15 which are mounted concentrically around the axis 14 of the engine. The connection of each biarticulated bar 15 to the outer ring segments 6a and 6b is effected by the cylindrical articulation 16, and its connection to the divergent master petal 5 is effected by a cylindrical articulation 17. Both cylindrical articulations 16 and 17 are disposed in such a manner that, without orientation of the flow, they are tangent to a theoretical circumference concentric to the longitudinal axis of the engine and located in a theoretical plane perpendicular to said longitudinal axis of the engine.

The control system of the nozzle includes, furthermore, a mechanism for regulating the throat area A8, already shown in Figure 11, which is formed, for each convergent master petal, of a single connecting rod 37, a two-arm crank 38, and a peripheral bar 39, said connecting rod 37 being connected at its upstream end, by a spherical articulation 40, to the downstream end of the fixed structure 1 of the engine and, at its downstream end, to one of the arms 41 of said crank 38 which is articulately mounted on a pivot, which, forming an integral part of said convergent master petal 4, has its axis perpendicular to the base of said convergent master petal, while the other arm 43 of said crank 38 is connected, by spherical articulation 44, to one of the ends of the peripheral bar 39, while the other end of said peripheral bar is connected by spherical articulation to the pivot of the adjacent convergent master petal in order for the assembly of cranks 38 and peripheral bars 38 of all the convergent master petals to form a peripheral system closed on itself.

As can be seen from Figures 12 to 15, the inner ring 8 has a cylindrical extension 8a by which the after-burner is sealed during the adjustment of the throat area A8 12 of the nozzle. The axis of this cylindrical extension 8a has to be located always on the longitudinal axis of the engine 14, for which there are present on the upstream end of said cylindrical extension 8a at least three hinges for connection to the fixed structure 1 of the engine, each having two leaves, designated 48 and 49 in Figure 12, which will make it possible to move the inner ring 8 only in axial direction.

For their part, the outer ring segments 6a and 6b are guided laterally by flat systems of articulated bars, the members of which are indicated by the numerals 64 to 68, for connection with the fixed structure 1 of the engine, Figure 12, which make it possible to move the outer ring segments only in axial direction, permitting the swinging of these outer ring segments 6a and 6b around the cylindrical articulation bolts 20, each of said flat systems of articulated bars being connected articulately at its downstream end to the assembly of articulated outer ring segments 6a and 6b while, at its upstream end, it is connected, also in articulated manner, to the fixed structure 1 of the engine. The guide systems described for the outer ring segments 6a and 6b and inner ring 8 must absorb the net shear forces which appear during the orientation of the flow and those due to asymmetries of the loads.

The description described, shown in the figures, permits, by activation in one direction or the other of the control actuators 9, the following functions which have already been mentioned:
1. Axial movement, in the same direction, of the assembly of outer ring segments 6a and 6b and inner ring 8, together with the biarticulated bars and the convergent and divergent petals, in order to regulate the throat area A8 indicated by the numeral 12. Said axial movement of the outer ring segments 6a and 6b and ring 8 causes an angular displacement of the convergent master petals 4 through the perimetral mechanism for the regulating of the area of the throat A8 around the articulation 10. Said convergent master petals 4, due to the connecting rod 37, the two-arm crank 38, and the peripheral bar 39, open or close in radial direction, defining, together with the biarticulated bars 15, the position of the divergent master petals 5. In this function, the control actuators 9 always have the same length.
2. The outer ring segments 6a and 6b swing, as a single body, on a theoretical spherical surface centered on the longitudinal axis 14 of the engine, the inner ring 8 remaining immobilized in any axial position in order to obtain, through the biarticulated bars 15, the orientation of the flow in any direction around the longitudinal axis 14 of the engine. In this second function, the control actuators 9 have different lengths.
3. To the preceding movement there is added the possibility of symmetric relative swinging between the outer ring segments 6a and 6b in order to obtain, through the biarticulated bars 15, a bisymmetric variation of the exit area A9, indicated by the numeral 13 in Figures 13 to 15, with an immobilized throat area A8, both orienting and without orienting the flow. In this third function, the actuators of the control systems which move the outer ring segments have equal path increments.
4. In an oriented flow geometry, with independent swinging of only one of the outer ring segments 6a or 6b, the exit area A9 is corrected asymmetrically through the biarticulated bars 15. In this fourth function, only those actuators of the control system which move the swung outer ring segment have a negative increment.

The four functions can be realized simultaneously.

The participation of the other components of this single control system nozzle is identical to what has already been described for the first embodiment.

## Claims

1. An axisymmetric nozzle of variable geometry with orientation of the thrust, which is intended for gas turbine engines for twin-jet planes, the nozzle comprises a convergent zone (2) which defines a throat of variable area A₈ (12) and is formed by convergent master petals (4) and convergent slave petals (33) which rest on the adjacent convergent master petals, followed in the direction of the flow of gas by a divergent zone (3) formed by divergent master petals (5) and by divergent slave petals (34) which rest on the adjacent divergent master petals and are connected to said adjacent divergent master petals by a centering mechanism, the petals of said convergent and divergent zones being distributed circumferentially around the longitudinal axis (14) of the engine, and every convergent master petal (4) being connected to its divergent master petal (5) by a tangential cylindrical articulation (25) of axis perpendicular to the longitudinal axis (14) of the engine; and each master petal (5) of the divergent zone (3) being divided into two segments, the upstream segment (3a) and the downstream segment (3b), which are connected together by cylindrical articulations (24) which have their axis perpendicular to said tangential cylindrical articulation between convergent master petal and divergent master petal; and it also comprises control means for regulating the throat area A₈ and vectoring the thrust, which consist of an inner ring (8), another intermediate ring (7), and an outer ring (6) which are concentric to each other and to the longitudinal axis of the engine, and of a plurality of linear actuators (9), each with its upstream ends and its downstream end, and a mechanism for regulating the throat area, the convergent master petals (4) being connected to the inner ring (8) by cylindrical articulations (10) having axes tangential to the longitudinal axis of the engine; and all the linear actuators (9) being connected in articulated manner at their upstream ends to a fixed structure (1) of the engine, while a part of the linear actuators (9) have their downstream end connected to spherical articulations (11) of the outer ring (6) and the other part of said linear actuators have their downstream end connected to spherical articulations (11) of the intermediate ring (7); and each of said rings being connected independently to the fixed structure of the engine by support means which do not interconnect them and maintains each ring fixed laterally; and it also comprises a set of biarticulated bars (15), one for each divergent master petal (5), which interconnect the downstream segments of the divergent master petals with the outer ring; the vectoring of the thrust in the divergent zone (5) being obtained by the inclination of the outer ring (6) with a center of swing located on the longitudinal axis of the engine via the set of biarticulated bars (15); wherein the outer ring (6) includes two outer ring segments (6a, 6b) biarticulated to each other by a pair of cylindrical articulations (20) which make it possible to vary symmetrically, by a simultaneous swinging in opposite direction of the two outer ring segments, the exit area A₉ (13) with respect to an immobilized throat area A₈, and during the vectoring of the flow of gas, by an independent swinging of one of the two outer ring segments (6) to correct the exit area asymmetrically while the other outer ring segment remains immobilized, **characterized by** the fact that the two outer ring segments (6a, 6b) have their ability of swing limited to a single plane and therefore can vector the thrust only in the plane of pitch of the airplane.

2. A nozzle according to Claim 1, in which the inner ring (8) and the intermediate ring (7) and the two interarticulated outer ring segments (6a, 6b) are not connected together and constitute, in combination with the plurality of linear actuators (9) and the mechanism for regulating the throat area, two control systems in which the regulating of the throat area A₈ is obtained by axial displacement of only the intermediate ring (7) and in which the symmetric variation of the exit area with respect to an immobilized throat area is obtained by a simultaneous swinging in opposite direction of the two outer ring segments (6a, 6b) and in which the vectoring of the thrust is obtained by a simultaneous swinging in the same direction of the two segments of the outer ring with a single center of swing on the longitudinal axis of the engine and in which the asymmetric correction of the exit area, during the vectoring of the flow, is obtained by an independent swinging of one of the two outer ring segments while the other outer ring segment remains immobilized, **characterized by** the fact that the segments of the outer ring (6a, 6b) are interconnected by a pair of cylindrical articulation bolts (20) fixed in the fixed structure (1) of the engine the axes of which are normal to the longitudinal axis (14) of the engine and which are in a horizontal plane which contains the longitudinal axis of the engine.

3. A nozzle according to Claim 1, **characterized by** the fact that the control means for regulating the throat area A₈, symmetrically varying the exit area A₉, vectoring the thrust, and correcting the exit area, consist of an inner ring (8) and an outer ring (6), the outer ring segments (6a, 6b) being interconnected by a pair of cylindrical articulation bolts (20), fitted in the inner ring, the axes of said bolts being normal to the longitudinal axis (14) of the engine and being located in the horizontal plane which contains the longitudinal axis of the engine, in order to constitute a single control system in combination with the plurality of linear actuators (9) and the mechanism for the regulating of the throat area, in which the regulating of the throat area is obtained by an axial displacement of the assembly of inner ring (8) and outer ring segments (6a, 6b) and, in which, the symmetric variation of the exit area with respect to an immobilized throat area is obtained by a simultaneous swinging in opposite direction of the two outer ring segment (6a, 6b) and in which the vectoring of the thrust is obtained by a simultaneous swinging in the same direction of the two outer ring segments (6a, 6b) with the centers of swing on the longitudinal axis of the engine, and in which the asymmetric correction of the exit area A₉, during the vectoring of the flow of gas, is obtained by an independent swinging of one of the two outer ring segments, while the other outer ring segment remains stationary.

## Patentansprüche

1. Achsymmetrische Düse veränderlicher Geometrie mit Schuborientierung, vorgesehen für Gasturbinentriebwerke für zweistrahlige Flugzeuge, welche Düse eine konvergierende Zone (2) aufweist, die einen Hals (12) mit veränderlicher Fläche A ₈ definiert und durch konvergierende Hauptklappen (4) und konvergierende Nebenklappen (33) gebildet ist, die sich an den angrenzenden konvergierenden Hauptklappen (4) abstützen, gefolgt in Gasströmungsrichtung von einer divergierenden Zone (3), die durch divergierende Hauptklappen (5) und divergierende Nebenklappen (34) gebildet ist, die sich an den angrenzenden divergierenden Hauptklappen abstützen und mit den genannten angrenzenden divergierenden Hauptklappen mittels eines Zentriermechanismus verbunden sind, wobei die Klappen der genannten konvergierenden und divergierenden Zonen umfänglich rings um die Längsachse (14) des Triebwerkes verteilt sind und jede konvergierende Hauptklappe (4) mit ihrer divergierenden Hauptklappe (5) mittels einer tangentialen zylindrischen Gelenkverbindung (25) mit zur Längsachse (14) des Triebwerkes senkrechter Achse verbunden ist und wobei jede Hauptklappe (5) der divergierenden Zone (3) in zwei Segmente unterteilt ist. das stromaufwärts gelegene Segment (3a) und das stromabwärts gelegene Segment (3b), welche miteinander durch zylindrische Gelenkverbindungen (24) verbunden sind, deren Achsen senkrecht zu der genannten tangentialen Gelenkverbindung zwischen konvergierender Hauptklappe und divergierender Hauptklappe ausgerichtet sind; und auch mit einem Steuermittel, um die Halsfläche A ₈ sowie den Schubvektor zu steuern, welches aus einem inneren Ring (8), einem weiteren Zwischenring (7) und einem äußeren Ring (6), die zueinander und zu der Längsachse des Triebwerkes konzentrisch sind, aus einer Mehrzahl Linearbetätiger (9), jeder mit stromaufwärts und stromabwärts gelegenem Ende, und aus einem Mechanismus zur Einstellung der Halsfläche gebildet ist, wobei die konvergierenden Hauptklappen (4) mit dem inneren Ring (8) mittels zylindrischer Gelenkverbindungen (10) verbunden sind, die tangential zur Längsachse des Triebwerkes verlaufende Achsen besitzen, und sämtliche der Linearbetätiger (9) in gelenkiger Weise an ihren stromaufwärts gelegenen Enden mit einer feststehenden Struktur (1) des Triebwerkes verbunden sind, während ein Teil der Linearbetätiger (9) mit ihrem stromabwärts gelegenen Ende mit sphärischen Gelenkverbindungen (11) des äußeren Ringes (6) verbunden sind und der andere Teil der genannten Linearbetätiger mit ihrem stromabwärts gelegenen Ende mit sphärischen Gelenkverbindungen (11) des Zwischenringes (7) verbunden ist, und wobei jeder der genannten Ringe unabhängig mit der feststehenden Struktur des Triebwerkes mittels Lagerungsmitteln verbunden ist, welche sie nicht miteinander verbinden und jeden Ring seitlich fixiert halten; und auch mit einem Satz von Doppelgelenkstangen (15), eine für jede divergierende Hauptklappe (5), welche die stromabwärts gelegenen Segmente der divergierenden Hauptklappen mit dem äußeren Ring verbinden; wobei die Schubvektorsteuerung in der divergierenden Zone (3) durch Neigen des äußeren Ringes (6) erreicht wird, wobei ein Schwenkzentrum auf der Längsachse des Triebwerkes über den Satz Doppelgelenkstangen (15) plaziert ist, wobei der äußere Ring (6) zwei äußere Ringsegmente (6a, 6b) beinhaltet, die miteinander mittels eines Paares zylindrischer Gelenkverbindungen (20) doppelgelenkig sind, was es möglich macht, die Austrittsfläche A ₉ (13) vermittels gleichzeitigen Schwenkens der zwei äußeren Ringsegmente in zueinander entgegengesetzte Richtungen symmetrisch relativ zu einer festgelegten Halsfläche A ₈ zu variieren und während der Vektorsteuerung der Gasströmung mittels eines unabhängigen Schwenkens eines der zwei äußeren Ringsegmente (6) die Austrittsfläche asymmetrisch zu korrigieren, während das andere Ringsegment unbeweglich verbleibt, **gekennzeichnet dadurch, dass** die zwei äußeren Ringsegmente (6a, 6b) in ihrer Schwenkbarkeit auf eine einzige Ebene eingeschränkt sind und den Schubvektor daher lediglich in der Nickebene des Flugzeuges steuern können.

2. Düse nach Anspruch 1, bei der der innere Ring (8) und der Zwischenring (7) sowie die zwei gelenkig miteinander verbundenen äußeren Ringsegmente (6a, 6b) nicht miteinander verbunden sind und in Kombination mit der Mehrzahl von Linearbetätigern (9) und dem Mechanismus zur Einstellung der Halsfläche zwei Steuersysteme bilden, bei denen das Einstellen der Halsfläche A ₈ durch Axialverschiebung lediglich des Zwischenringes (7) erhalten wird und die symmetrische Veränderung der Austrittsfläche relativ zu einer unbeweglichen Halsfläche durch ein gleichzeitiges Schwenken der zwei äußeren Ringsegmente (6a, 6b) in zueinander entgegengesetzte Richtungen erreicht wird und wobei die Schubvektorsteuerung mittels eines gleichzeitigen Schwenkens der zwei Segmente des äußeren Ringes in der gleichen Richtung mit einem einzigen Schwenkzentrum auf der Längsachse des Triebwerkes erreicht wird und die asymmetrische Korrektur der Austrittsfläche, während der Vektorsteuerung der Strömung, durch ein unabhängiges Schwenken eines oder der zwei äußeren Ringsegmente erreicht wird, während das andere äußere Ringsegment stillstehend bleibt, **dadurch gekennzeichnet, dass** die Segmente (6a, 6b) des äußeren Ringes miteinander mittels eines Paares zylindrischer Schwenkbolzen (20) verbunden sind, die an der feststehenden Struktur (1) des Triebwerkes befestigt sind und deren Achsen normal zur Längsachse (14) des Triebwerkes und in einer Horizontalebene verlaufen, welche die Längsachse des Triebwerkes enthält.

3. Düse nach Anspruch 1, **dadurch gekennzeichnet, dass** die Steuermittel zur Einstellung der Halsfläche A ₈, zum symmetrischen Verändern der Austrittsfläche A ₉, zur Schubvektorsteuerung und zum Korrigieren der Austrittsfläche aus einem inneren Ring (8) und einem äußeren Ring (6) bestehen, dass die Segmente (6a, 6b) des äußeren Ringes durch ein Paar zylindrischer Schwenkbolzen (20) miteinander verbunden sind, die in den inneren Ring eingepaßt sind, wobei die Achsen genannter Bolzen normal zur Längsachse (14) des Triebwerkes und in der Horizontalebene gelegen sind, die die Längsachse des Triebwerkes enthält, um ein einziges Steuersystem in Kombination mit der Mehrzahl von Linearbetätigern (9) und dem Mechanismus zur Einstellung der Halsfläche zu bilden, bei dem das Einstellen der Halsfläche durch eine Axialverschiebung der Einheit aus innerem Ring (8) und äußeren Ringsegmenten (6a, 6b) erhalten wird und bei dem die symmetrische Veränderung der Austrittsfläche relativ zu einer unbeweglichen Halsfläche durch ein gleichzeitiges Schwenken der zwei äußeren Ringsegmente (6a, 6b) in zueinander entgegengesetzten Richtungen erreicht wird und die Schubvektorsteuerung durch ein gleichzeitiges Schwenken der zwei äußeren Ringsegmente (6a, 6b) in der gleichen Richtung erreicht wird, wobei die Schwenkzentren auf der Längsachse des Triebwerkes liegen und die asymmetrische Korrektur der Austrittsfläche A ₉ während der Vektorsteuerung der Gasströmung durch ein unabhängiges Schwenken eines oder der zwei äußeren Ringsegmente erreicht wird, während das andere äußere Ringsegment stationär bleibt.

## Revendications

1. Tuyère symétrique par rapport à l'axe, à géométrie variable, avec orientation de la poussée, destinée aux moteurs à turbine à gaz pour avions biréacteurs dont la tuyère comprend une zone convergente (2) définissant une surface d'étranglement A8 (12) et formée par des aubes maîtresses convergentes (4) et des aubes esclaves convergentes (33) s'appuyant sur les aubes maîtresses convergentes adjacentes, suivie, dans le sens de la circulation de gaz, d'une zone divergente (3) formée par des aubes maîtresses divergentes (5) et des aubes esclaves divergentes (34) s'appuyant sur les aubes maîtresses divergentes adjacentes et reliées auxdites aubes maîtresses divergentes adjacentes par un mécanisme de centrage, les aubes desdites zones convergente et divergente étant réparties en circonférence autour de l'axe longitudinal (14) du moteur, et chaque aube maîtresse convergente (4) étant reliée à son aube maîtresse divergente (5) par une articulation cylindrique tangentielle (25) à axe perpendiculaire à l'axe longitudinal (14) du moteur, et chaque aube maîtresse (5) de la zone divergente (3) étant divisée en deux segments, le segment amont (3a) et le segment aval (3b), lesquels sont reliés l'un à l'autre par des articulations cylindriques (24) dont l'axe est perpendiculaire à ladite articulation cylindrique tangentielle entre aube maîtresse convergente et aube maîtresse divergente ; et elle comprend également un moyen de régulation destiné à réguler la surface d'étranglement A8 et à orienter la poussée, composé d'une bague intérieure (8), d'une autre bague intermédiaire (7), et d'une bague extérieure (6) concentriques entre elles et par rapport à l'axe longitudinal du moteur, et d'une pluralité d'actuateurs linéaires (9), chacun avec leur extrémité amont et leur extrémité aval, et d'un mécanisme de régulation de la surface d'étranglement, les aubes maîtresses convergentes (4) étant reliées à la bague intérieure (8) par des articulations cylindriques (10) à axes tangentiels à l'axe longitudinal du moteur; et tous les actuateurs linéaires (9) étant connectés de manière articulée, à leurs extrémités amont, à une structure fixe (1) du moteur, tandis qu'une partie des actuateurs linéaires (9) présentent leur extrémité aval connectée aux articulations sphériques (11) de la bague extérieure (6) et l'autre partie desdits actuateurs linéaires présentent leur extrémité aval connectée aux articulations sphériques (11) de la bague intermédiaire (7) ; et chacune desdites bagues étant connectée, de manière indépendante, à ladite structure fixe du moteur, par un moyen de support qui ne les relie pas l'une à l'autre et maintient chaque bague fixée latéralement; et elle comprend également un jeu de barres bi-articulées (15), une pour chaque aube maîtresse divergente (5), laquelle connecte les segments aval des aubes maîtresses divergentes à la bague extérieure; l'orientation de la poussée dans la zone divergente (5) étant obtenu par l'inclinaison de la bague extérieure (6) à centre d'oscillation situé sur l'axe longitudinal du moteur, par l'intermédiaire du jeu de barres bi-articulées (15) ; dans laquelle la bague extérieure (6) comporte deux segments de bague extérieure (6a, 6b) bi-articulées l'une par rapport à l'autre par une paire d'articulations cylindriques (20) permettant de modifier de manière symétrique, par oscillation simultanée en direction opposée des deux segments de bague extérieure, la surface de sortie A9 (13) par rapport à une surface d'étranglement immobilisée A8 et, pendant l'orientation du flux de gaz, par une oscillation indépendante de l'un des deux segments de bague extérieure (6), pour corriger la surface de sortie de manière asymétrique, tandis que l'autre segment de bague extérieure reste immobilisé, **caractérisée par le fait que** les deux segments de bague extérieure (6a, 6b) ont leur aptitude à l'oscillation limitée par un seul plan et, de ce fait, ne peuvent orienter la poussée que dans le plan de tangage de l'avion.

2. Tuyère selon la revendication 1, dans laquelle la bague intérieure (8) et la bague intermédiaire (7) et les deux segments de bague extérieure articulés l'un par rapport à l'autre (6a, 6b) ne sont pas reliés l'un à l'autre et constituent, en combinaison avec la pluralité d'actuateurs linéaires (9) et le mécanisme de régulation de la surface d'étranglement, deux systèmes de régulation dans lesquels la régulation de la surface d'étranglement A8 est obtenue par déplacement axial uniquement de la bague intermédiaire (7) et dans laquelle la variation symétrique de la surface de sortie par rapport à une surface d'étranglement immobilisée est obtenue par une oscillation simultanée en direction opposée des deux segments de bague extérieure (6a, 6b) et dans laquelle l'orientation de la poussée est obtenue par une oscillation simultanée dans la même direction des deux segments de la bague extérieure à centre d'oscillation unique sur l'axe longitudinal du moteur et dans laquelle la correction asymétrique de la surface de sortie, pendant l'orientation du flux, est obtenue par une oscillation indépendante de l'un des deux de bague extérieure, tandis que l'autre segment de bague extérieure reste immobilisé, **caractérisé par le fait que** les segments de la bague extérieure (6a, 6b) sont reliés l'un à l'autre par une paire de boulons d'articulation cylindriques (20) fixés dans la structure fixe (1) du moteur dont les axes sont normaux à l'axe longitudinal (14) du moteur et qui se situent dans un plan horizontal contenant l'axe longitudinal axis du moteur.

3. Tuyère selon la revendication 1, **caractérisée par le fait que** les moyens de régulation destinés à réguler la surface d'étranglement A8, modifier de manière symétrique la surface de sortie A9, orienter la poussée et corriger la surface de sortie consistent en une bague intérieure (8) et une bague extérieure (6), les segments de bague extérieure (6a, 6b) étant reliés l'un à l'autre par une paire de boulons d'articulation cylindriques (20), montés dans la bague intérieure, les axes desdits boulons étant normaux à, l'axe longitudinal (14) du moteur et situés dans le plan horizontal contenant l'axe longitudinal axis du moteur, afin de constituer un système de régulation unique en combinaison avec la pluralité d'actuateurs linéaires (9) et le mécanisme de régulation de la surface d'étranglement, dans laquelle la régulation de la surface d'étranglement est obtenue par un déplacement axial de l'ensemble de bague intérieure (8) et de segments de bague extérieure (6a, 6b) et dans laquelle la variation symétrique de la surface de sortie par rapport à une surface d'étranglement immobilisée est obtenue par une oscillation simultanée en direction opposée des deux segments de bague extérieure (6a, 6b) et dans laquelle l'orientation de la poussée est obtenue par une oscillation simultanée dans la même direction des deux segments de bague extérieure (6a, 6b) avec les centres d'oscillation sur l'axe longitudinal du moteur, et dans laquelle la correction asymétrique de la surface de sortie A9, pendant l'orientation du flux de gaz, est obtenue par une oscillation indépendante de l'un des deux segments de bague extérieure, tandis que l'autre segment de bague extérieure reste stationnaire.
